(19) Europäisches Patentamt
European Patent Office
Office européen des brevets

(11) **EP 3 038 370 A1**

(12) **EUROPEAN PATENT APPLICATION**

(43) Date of publication:
**29.06.2016 Bulletin 2016/26**

(21) Application number: **14307117.3**

(22) Date of filing: **22.12.2014**

(51) Int Cl.:
*H04N 21/24* (2011.01)          *H04N 21/2343* (2011.01)
*H04N 21/845* (2011.01)        *H04N 21/6336* (2011.01)
*H04N 21/6379* (2011.01)      *H04N 21/442* (2011.01)
*H04N 19/156* (2014.01)        *H04N 19/164* (2014.01)
*H04N 21/443* (2011.01)        *H04N 19/132* (2014.01)
*H04N 19/46* (2014.01)          *H04N 21/4728* (2011.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ALCATEL LUCENT
92100 Boulogne-Billancourt (FR)**

(72) Inventors:
• **Rondao Alface, Patrice
2018 Antwerpen (BE)**

• **Stevens, Christoph
2018 Antwerpen (BE)**
• **Macq, Jean-François
2018 Antwerpen (BE)**

(74) Representative: **ALU Antw Patent Attorneys
Intellectual Property and Standards
Copernicuslaan 50
2018 Antwerp (BE)**

(54) **Devices and method for video compression and reconstruction**

(57)     A Sender device (S) is adapted to receive a high resolution video (HRV) and to generate a reduced resolution video (RRV) by down sampling said high resolution video (HRV), said sender device further being adapted to select at least one high resolution patch (Pi) from at least one frame from said high resolution video (HRV), and to encode said reduced resolution video (RRV) and said at least one patch (Pi) for further transmission to a receiver device (R), said sender device further being adapted to monitor the power consumed and remaining battery lifetime of said sender device, and to control the down sampling of said high resolution video as being dependent upon the remaining battery lifetime, said sender device further being adapted to receive a feedback signal from said receiving device, said feedback signal comprising information concerning the quality of the at least one patch, received at said receiving device, said sender device further being operational to adapt the selection of said at least one patch based on said feedback signal.

A receiver device for reconstructing the original high resolution video from the received encoded signals from the sender is set out as well.

Fig. 1c

EP 3 038 370 A1

**Description**

The present invention relates to a method and devices for video compression and reconstruction.

In present high resolution video transmission systems the encoder side devices may sometimes suffer from limited battery power and/or limited computational power. This can be the case, especially for handheld devices where the encoder side device may on one hand comprise or be coupled to a high resolution video camera mounted on such a handheld or mobile device such as a laptop, a tablet, a smart phone, a game console or the like. The encoder side device may further comprises a video encoder, and a wireless or wired connection to a receiver. The receiving device may be equipped with a battery with superior capacity or can be directly plugged to a power supply. This receiving device as well comprises a video decoder.

A problem may arise in view of the limited battery and/or limited computational capability of the sender device which on one hand is thus able to capture or receive large resolution video inputs but on the other hand lacks the necessary resources to properly encode and /or transmit such a huge video file.

The power which is needed for the encoding of the video and/or the transmission of the compressed video will limit the autonomy of the sender device. On the other hand the receiving device, especially fixed devices such as a server, or a fixed pc, a television, game consoles, or a remote cloud server etc, does not have such limitations for decoding or further processing the video at such resolution. When trying to reduce the power consumption related to the transmission, while maintaining a high video quality, the encoder power consumption raises because achieving high compression performance induces high computational complexity (e.g., growing computational complexity and compression performance of MPEG 2, H.264 and H.265). Choosing a low power encoder with limited compression performance will increase the data rate to be transmitted , again increasing the power consumption of the sender device.

Existing approaches may comprise sacrificing quality for reducing power consumption in the sender device. Either this is done by selecting very high quantization parameters at the encoder side, which results in high resolution video but with distortions, or this is done by reducing the video resolution and/or frame rate with less severe quantization parameters but still with a severe loss of quality due to the spatial or temporal sub-sampling.

Some works have also focused on a low transmission and very low encoding power consumption by means of compressive sensing. However, for achieving a good quality in the video reconstruction process at the receiver device, such approach requires the transmission of a large percentage of captured samples, increasing the transmission cost. It is to be noted that the transmission cost in terms of power can be as large as the one for encoding or decoding operations (with e.g. H.264) on a device, for typical bitrates required for acceptable video quality.

It is therefore an object of embodiments of the present invention to provide devices and a method which do not show the inherent disadvantages of the prior art devices and method.

According to embodiments of the invention this object is achieved by the provision of a sender device according to claim 1, which is able to be operable connected to a receiver according to claim 6.

In this way the limited power budget of the sender, both in terms of processing and transmission capability, is taken into account. The feedback provided by the receiver further allows to quickly adapt to decreased quality observations as present in the receiver, while still taking into account limited resources in the sender. In contrast to prior art techniques, this solution also allows for reducing the power budget and also the required bandwidth to transmit the video to the receiver by applying down sampling while achieving a video reconstruction quality at the receiver side that is much closer to the quality of the original resolution video than to the quality of the down sampled video. This is achieved by sending a selected low set of data at original resolution that enables the receiver to reconstruct the original content and at the same time to determine the quality of this selected low set of data (up to compression artifacts) at the frame rate of the transmitted video. An advantage of the method is that the receiver can further guide the selection of the observed data at original resolution in order to improve the reconstruction of the down sampled video without requiring the sender to perform any advanced video analysis that would require more power processing.

In an embodiment the sender device is further adapted to select successive ones of said at least one high resolution patches from successive frames of said high resolution video. The associated receiving device is then adapted to store successive ones of said at least one received high resolution patches.

This allows to create a dictionary at the receiver of the received high resolution patches.

In an embodiment the receiving device is further adapted to request additional patches based on the determination of the quality and/or provide an indication of the frame region from which to select said additional patches in the high resolution video at the sender device.

This allows to further improve the reconstruction of the video at the receiver, while still maintaining a low power consumption at the sender.

In an embodiment the sender device is further adapted to receive bandwidth information concerning the bandwidth of the communication link between the sender device and said receiver device, and to further adapt the downsampling and/or the patch selection based on said bandwidth information. This allows for a further optimization of bandwidth, power and processing capabilities.

An another embodiment the sender device is further being adapted to determine the down sampling factor from said feedback signal from the receiver device.

Both embodiment allow to further improve the patch selection and down sampling, with the aim of reconstructing the highest possible quality at the receiver.

Metadata information concerning the down sampling and encoding are in an embodiment provided by the sender to said receiver device, allowing the latter to optimally and quickly reconstruct the high resolution video.

The present invention relates as well to embodiments of a method for compressing a high resolution input video stream in a sender for further transmission to a receiver, and to embodiments of a method for reconstructing from the received stream from the sender, the high resolution video.

The present invention relates as well to embodiments of a computer program for performing the above mentioned methods, and to embodiments of a computer readable storage medium comprising instructions to cause a data processing apparatus to carry out such a program.

It is to be noticed that the term 'coupled', used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

The above and other objects and features of the invention will become more apparent and the invention itself will be best understood by referring to the following description of an embodiment taken in conjunction with the accompanying drawings wherein:

Figs. 1a-d schematically show several high-level embodiments of a sender device operationally coupled to a receiver device ,
Fig. 2 shows an example of a patch selection procedure in the sender,
Fig 3 shows more detailed implementations of a machine learning module in the receiver,
Fig. 4 shows a first example of a table-based state machine in the sender,
Fig. 5 shows an implementation of a state machine in the sender,

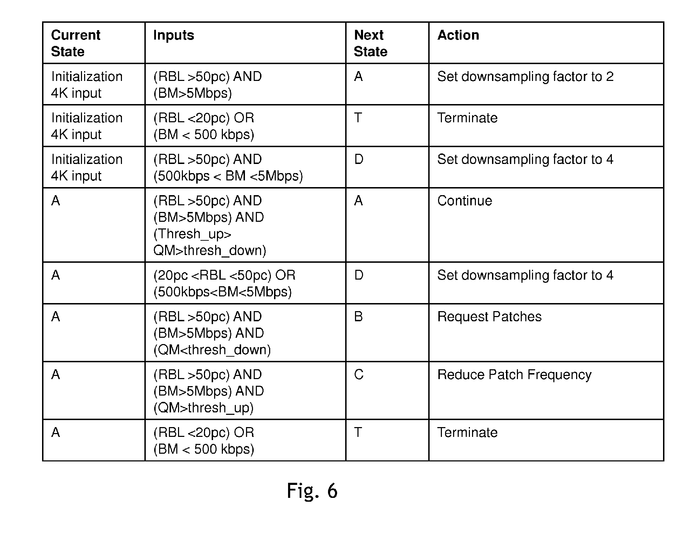

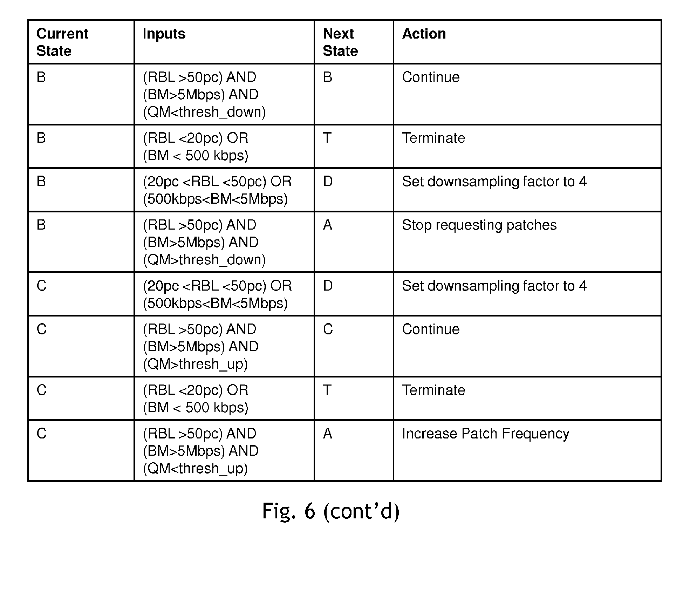

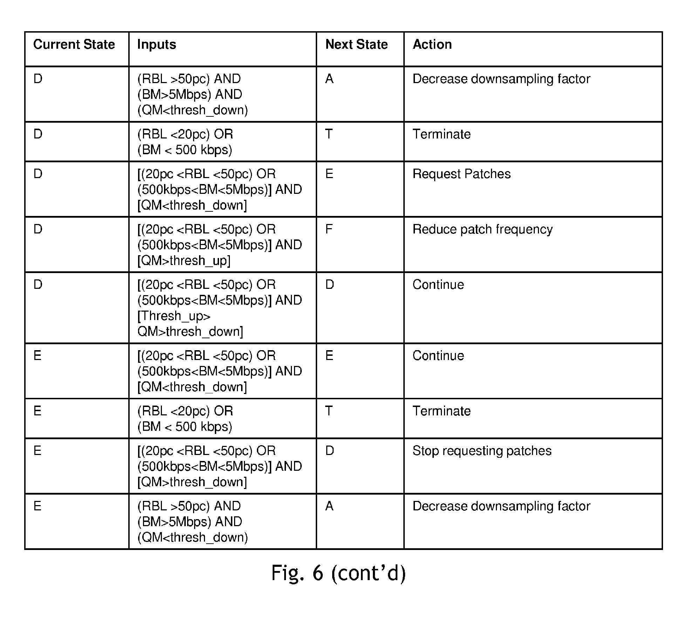

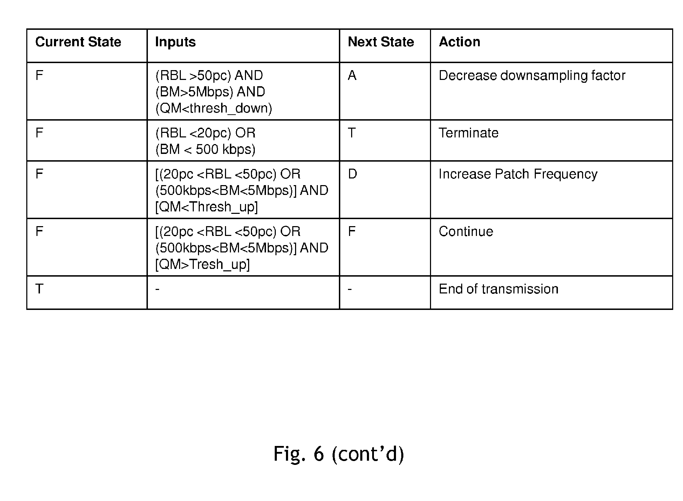

Fig. 6 shows another detailed implementation of a table based state machine in the sender.

It is to be remarked that the following merely illustrates the principles of the invention. It will thus be appreciated that those skilled in the art will be able to devise various arrangements that, although not explicitly described or shown herein, embody the principles of the invention. Furthermore, all examples and conditional language recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Embodiments of the method and devices in accordance to the present invention seek to find a solution for a problem of having to transmit an incoming high resolution video signal from a sender S to a receiver device R, at the lowest computational complexity as possible at the sender, and further taking into account power consumption restrictions in this sender device too. More processing and electrical power is available at the receiver.. In some embodiments also bandwidth restrictions of the communication channel between both devices are further taking into account for the compression.

In the context of this document resolution should be understood as embracing spatial resolution, temporal resolution (frame rate), bit depth resolution (HDR), quality resolution (pixel accuracy), frequency resolution (multispectral, hyper spectral), view resolution (multi-view coding) and/or all combinations thereof.

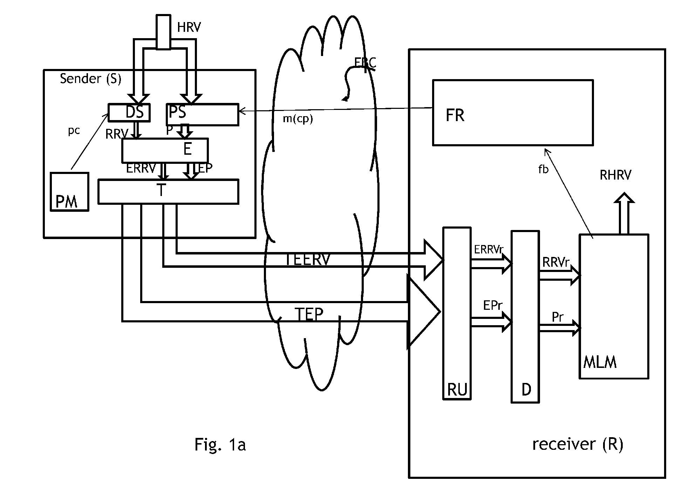

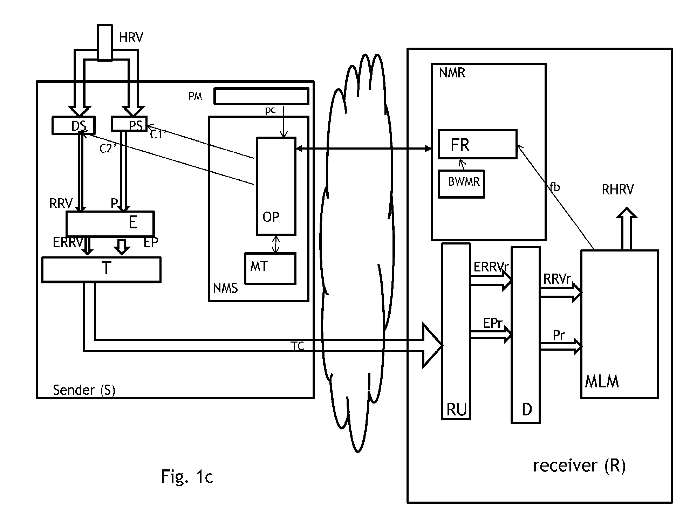

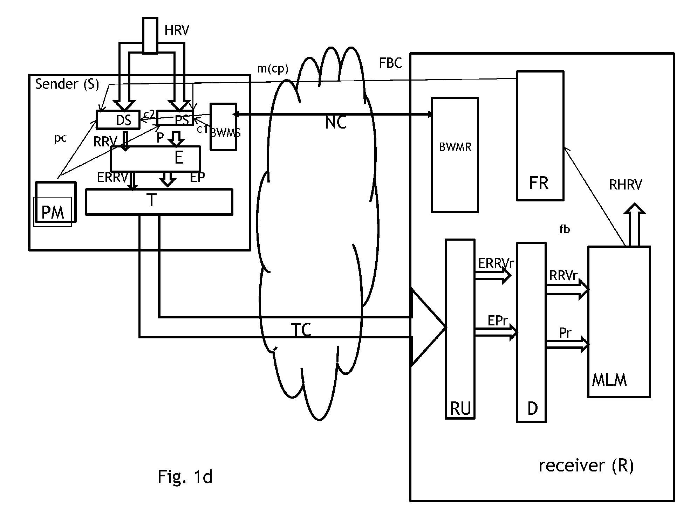

In accordance to a first embodiment of the method and devices, the sender device S receives the high resolution video, denoted HRV on Figs. 1a-d, from a high resolution capturing device (not shown in Figs. 1a-d). The sender S is adapted to subsequently generate reduced resolution video frames of the full resolution video content, by a down sampling device denoted DS, the resulting video sequence denoted reduced resolution video RRV in Figs. 1a-d. The thus obtained video sequence RRV, is subsequently encoded in an encoder E, which can be any state of the art encoder such as H.264/AVC, H.265/HEVC, MPEG-2, JPEG2000, WebM VP8 etc, to obtain an encoded reduced resolution video stream denoted ERRV in figs 1a,c and d.

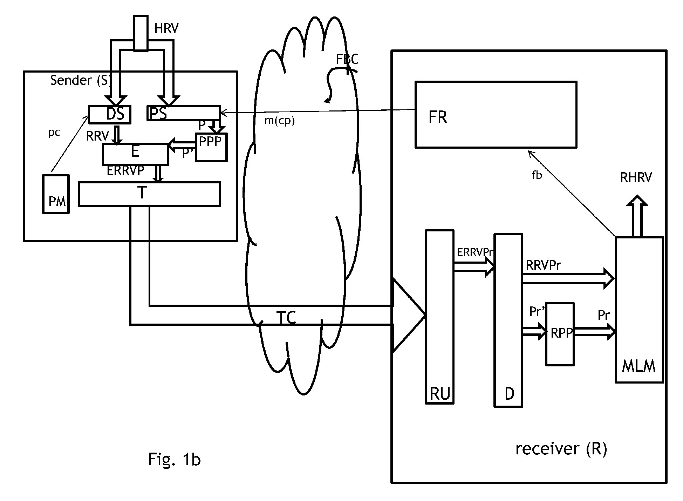

In parallel the high resolution video stream HRV is provided to a patch extraction device PS, adapted to extracts small patches of the full resolution video stream HRV, these patches being denoted P. These patches may correspond to traditional macro blocks of size 16x16 pixels, but may also be larger up to 128x128 pixels. In an embodiment these patches can all have the same size, but in another embodiment the size, thus the amount of pixels selected in the length and width direction, may vary. The varying size of the selected patches may be controlled by the receiver as is clear from the signal m(cp) provided by the receiver to the patch selector PS in figs 1a,b and d. Embodiments for the selection of these patches will be further set out in a later paragraph.

These patches are as well encoded for generating encoded patches denoted EP. The sender device S further comprises a transmission unit T adapted to encapsulate and transmit the thus encoded reduced resolution video stream ERRV together with the obtained encoded small patches EP of the full-resolution video content. The resulting signals are respectively denoted TEERV and TEP. In Fig. 1a they are shown as two separate encoded video streams. However in other embodiments, such as depicted in figs. 1b-d, only one encapsulated encoded video stream is generated and transmitted. This encapsulated encoded video stream is denoted TC in these figures, and is transmitted by the sender to a receiver over any type of communications network in between the sender and receiver. This communications network is shown by the cloud symbol in figs. 1a-d and can be any type of communications network, either fixed, mobile , satellite or any combination of this.

In an embodiment, the encoder E can be an AVC standard compliant encoder. To encode the RRV and the patches, some preprocessing may be needed in the sense that a special frame incorporating the patch is to be created. This can be done by copying the patch from its position in the high resolution frame picture and setting all possible remaining pixels to zero, thereby creating an auxiliary frame. In case of the H.264/AVC codec, this RRV together with these auxiliary frames are encoded as one video stream which is transmitted to the receiver. Information concerning the selected encoding scheme as well as the performed preprocessing is as well transmitted to the receiver, which, upon receipt will then be able to decode the auxiliary picture for retrieving the encoded patches. This information e.g. can be part of the encapsulated stream, as metadata. Alternatively this information may as well be provided in an initial signalization procedure between the sender and the receiver.

In another embodiment, the encoder is an enhanced WebM VP8 or VP9 encoder. In that case, the patch can be encoded as a so-called alternative reference frame with a specific flag "show_frame" set to zero. This means that the picture will be encoded as a reference frame but will not be displayed at the Receiver. In that case, it is also possible to encode one alternative reference frame for a set of a number of N frames, by aggregating N patches into the same alternative reference frame, for example in raster scan order. This is useful to avoid setting the remainder of the alternative reference frame to zeros and further improve the compression performance. Typically if the size of the patch is equal to KxK and the size of the alternative reference frame is MxM, then the number N of patches aggregated in one alternative reference frame will then be (M/K) times (M/K).

Also in this case some preprocessing is thus needed on the patches. Fig. 1b shows an embodiment of the sender with a patch preprocessing device, denoted PPP. The resulting frame is denoted P', and this is then provided to the encoder.

Information with respect to the type of encoder as well as the associated patch preprocessing is to be provided in this case as well by the sender to the receiver. This can be under the form of metadata, or during initial signaling. A bi-directional channel for such signaling is e.g. shown in Fig. 1d.

In another embodiment, the Extended Spatial Scalability of the Scalable Extension of H.264, named SVC, is exploited to encode the RRV as the base layer, and the patch blocks as a Region of Interest (ROI) that is coded as an enhancement layer. In this case the single encoded stream will comprise several layers.

It is clear from all mentioned cases that the choice taken by the sender concerning the encoding, and associated possible pre-processing of the patches for making them compatible with the selected encoding scheme, has to be provided to the receiver to, in order to enable the latter to perform the correct decoding an to perform some post-processing on the decoded frames containing the patches.

In case of two separate streams leaving the encoder, these can then be encapsulated separately using state of the art encapsulation protocols such as e.g. MPEG-TS, or encapsulated as a single stream using for example MMT (MPEG Media Transport). In case of a single stream leaving the encoder, the transmission and encapsulation module also uses known techniques for generating a single transport stream denoted TC on figs 1b-d.

In embodiments the reduced resolution video RRV may correspond to e.g. a base layer which is used in scalable video coding transmission, and can thus be generated using techniques similar to these used for scalable video coding base layer generation.

Alternatively, a reduced resolution video can also be obtained in other ways, e.g. by a simple down-sampling with or without prior low-pass filtering or tone mapping operations. Information with respect to the down-sampling factor f or additional filtering operations are also provided by the sender to the receiver, either during initial signaling , or can also be part of metadata in the header of the transport stream. The patches themselves, containing small extracts of the original video at full resolution can be generated in different ways, which will be explained in a further paragraph.

The receiver device R comprises a receive and de-capsulation unit, denoted RU, with the aim to de-multiplex TC into its components, which need to undergo further de-capsulation , or directly de-multiplex and de-capsulate TC into ERRV and EP. Due to transmission errors it is in general not possible to obtain the exact original encoded reduced resolution video ERRV, respectively encoded patches EP. In this respect, the de-capsulated received streams are denoted EERVr and EPr on figs 1a,c,d. In case of one encoded stream, such as was the case in Fig. 1b, RU merely performs the de-capsulation, resulting in a received de-capsulated encoded stream denoted ERRVPr.

The de-capsulated encoded received low resolution stream ERRVr is provided to a decoder D which is to perform the decoding operation. In the embodiment of Fig. 1b, the decoding of the received patches will be followed by extra post- processing steps related to the earlier pre-processing of the patches in the sender/encoder. In this figure the decoder may output received decoded frames comprising patches, denoted Pr', which need to undergo some further post-processing in a module denoted PPR, to extract or obtain therefrom the original patches. In view of some decoding /transmission errors, the obtained decoded patches are in general not identical to the selected patches in the encoder. They are for this reason denoted Pr.

The decoder is thus associated to the previously performed encoding in the sender. The resulting decoded low resolution stream and decoded patches are respectively denoted RRVr and Pr in figs 1a-d.

In one embodiment the decoder D may comprise a H.264/AVC decoder that outputs both the decoded RRV stream, including the auxiliary pictures comprising decoded frames with patches, which further have to undergo some processing for extracting there from the original patches, denoted Pr.

In another embodiment, the decoder comprises a modified WebM VP8 or VP9 decoder that outputs a decoded stream comprising the decoded RRV and the alternative reference frames as a separate decoded video for the encoded patches EP. Depending on which option was selected in the encoder, the decoded stream may contain some frames comprising a set of N aggregated patches, which afterwards need to be extracted in to the N separate patches.

In another embodiment the decoder comprises a SVC decoder that outputs both as a base layer the decoded ERRVr, and the decoded enhancement layer that contains the patches Pr. The patches are then to be extracted from this enhancement layer as well.

The receiver R further comprises a machine learning module, denoted MLM.

The machine learning module MLM takes as input the received reduced resolution video RRVr and the received patches Pr. Its aim is to reconstruct the high resolution video, thus at the original resolution. The output of MLM is denoted RHRV in Figs. 1a-d.

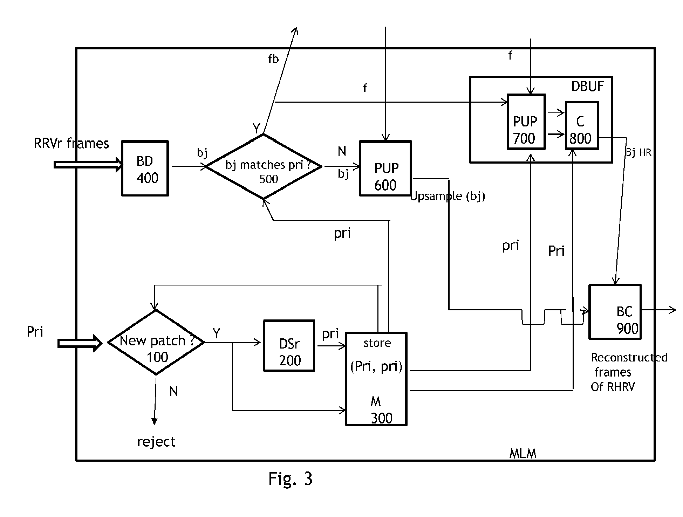

In an embodiment, depicted in Fig. 3, MLM comprises a patch dictionary, being a memory M, for storing newly received patches Pr, which are thus small high-resolution parts, together with an associated low-resolution counterpart patch, denoted pr.

The patch dictionary is initialized as an empty buffer of frames having a resolution equal to the resolution of the patches. For each received patch Pri, the MLM is adapted to compare this new received patch with the ones already contained in the patch dictionary M, using e.g. a simple sum of absolute differences (SAD)
which is computed for a patch Pi and a patch Pk of length NxN as follows:

$$\mathrm{SAD}(P_i, P_k) = \sum_{y=0}^{N-1} \sum_{x=0}^{N-1} |P_i(x, y) - P_k(x, y)| \qquad (1)$$

Other similarity measures can be used to compare the current received patch to patches in the dictionary, e.g. using the sum of squared differences, the normalized cross correlation, etc.

This SAD value is then compared with a certain threshold which can be fixed and in an example being equal to the number of pixels in the patch (allowing a difference of 1 in luminance for each pixel), but other thresholds can be defined. In practice the lower the threshold, the larger the dictionary size and the larger the receiver complexity but also the higher the resulting quality of the reconstructed video signal as will be clear from the explanation in a later paragraph.

If it is higher than the threshold, this is indicative of the fact that that particular patch is not yet present in the dictionary. In other words, if the comparison of a new patch with the ones in the dictionary does not generate an SAD value lower than this predefined threshold, then it is added to the dictionary.

In fig. 3 this check is indicated by means of a check operation on an incoming patch Pri, based on all stored patches in the memory so far. If Pri is a new patch, it will undergo a down sampling operation in a module denoted DSr. This down sampling module is the same or very similar to the one used in the sender. The down sampled version of Pri is denoted pri, and the latter is provided back to the dictionary to be stored together with Pri. The dictionary thus stores pairs of patches, meaning that for each newly received and accepted high resolution patch Pri, an associated low resolution block pri is stored. The dictionary M is therefore filled with pairs of low resolution and high resolution patch pairs.

The Machine learning module further comprises a block decomposer module, denoted BD. This module has as function to decompose successive RRVr frames into blocks that have the same size as the down-sampled patches pri, associated to the stored patches Pri, in the patch dictionary M. The successive blocks are denoted bj, and they are next compared with all stored down sampled patches pri, in order to check whether sufficiently matching blocks are present. Again here SAD or a Mutual Information criterion as explained in Maes, F., Collignon, A., Vandermeulen, D., Marchal, G., & Suetens, P. (1997) " Multimodality image registration by maximization of mutual information" in Medical Imaging, IEEE Transactions on, 16(2), 187-198, or a correlation measure as set out in Lewis, J. P. (1995, May) "Fast normalized cross-correlation" Vision interface (Vol. 10, No. 1, pp. 120-123) can be used to check whether a block bj of a frame of RRVr corresponds to a certain pri. In case the comparison yields a value that is higher or equal than a predetermined threshold, indicative that there is no pri available in the dictionary, this block will undergo an up-sampling operation in a module PUP. This up sampling is a standard up sampling which corresponds to DSr and can e.g. be performed using the up sampling filter standardized in H.264 SVC or in H.265 SHVC for spatial scalability inter-layer prediction and the up-sampling factor should be the inverse of the down sampling factor of the sender. This value f is communicated by the sender to the receiver, either during initial signaling, either within the metadata of the encoded encapsulated video. The value f is an input signal in the embodiment of Fig. 3.

In case the result of the correspondence check, e.g. using SAD, was lower than a predefined threshold, meaning that the current block is very similar to one of the low-resolution patches in the dictionary, for this block an adapted value Bj will be calculated based on the formula :

$$B_j^{HR} = \text{upsample } (b_j) + (Pr_i - \text{upsample } (pr_i^{LR}))  \quad\quad (2)$$

With up sample $(pr_i^{LR})$ being the standard re-up-sampled version of the earlier down sampled pri, this down sampled pri being denoted as $pr_i^{LR}$, which up-sampling is again performed by a standard up-sampling module PUP. This may be a similar module to the one used for the up-sampling of the blocks for which no matching patch was available in the dictionary M. Also here the up sampling factor f may be communicated beforehand, or be extracted from metadata in the header.

The latter PUP module forms part of a module denoted DBUF for calculating an adaptive block value, based on the patch dictionary M, and following equation (2) . According to (2) both the block bj, and pri have to undergo the standard up-sampling in PUP, after which step an update for bj is further calculated in module C.

It is to be noted that, although two separate standard up-sampling modules PUP are shown in fig. 3, embodiments are possible where only one of such modules e.g. under form of a filter, is present, which can then be shared. In this case good synchronization between both processes for the calculation of the updated blocks is to be foreseen.

Both standard up sampled, as well as dictionary based up sampled blocks are then again recombined in module BC, for reconstructing the successive frames of a now reconstructed high resolution video denoted RHVR. This can be done by creating a video frame at the reconstructed resolution and copying one by one each block at its corresponding position from the RRVr frame. In case blocks overlap, the average of the pixel values on the overlapping pixel positions from neighboring blocks is set in the reconstructed frame at the corresponding pixel position. Optionally a filter can be applied at block borders in the reconstructed frame, especially between blocks where one has been up sampled by the PUP filter and the other by the DBUF module.

In another embodiment of MLM, updated blocks for which a corresponding patch is stored in the dictionary, can be computed based on the K closest LR/HR patches pairs in the dictionary using Linear Local Embedding (LLE).

This involves the calculation of K coefficients wi which are computed by solving a linear system :

$$\text{vec}(pr_i) = A \text{ vec } (w_i) \quad\quad (3)$$

where vec consists in building a vector of the pixels luminance values of the patch pri in one column in raster scan, A is a matrix constructed by vectors of the pixels values of each of the K closest patches in rows and vec(wi) is a vector containing the weights of each of the K closest patches and where the sum of weights wi is equal to 1.

The up sampled block $b_j$ is then computed as :

$$B_j^{HR} = \text{upsample } (b_j) + \sum_k w_k (Pr_k^{HR} - \text{upsample } (pr_k^{LR})) \quad\quad (4)$$

Or alternatively as :

$$B_j^{HR} = \text{low\_pass}(\text{upsample}(b_j)) + \text{high\_pass}(\textstyle\sum_k w_k (Pr_k^{HR} - \text{upsample}(pr_k^{LR})))$$

$$(5)$$

Where low_pass and high_pass are DCT based filters defined as follows

$$low\ pass\ (f) = iDCT(s_l)$$

$$s_l = \begin{cases} DCT(f)(x,y)\ if\ x < f_{cx}, y < f_{cy} \\ \qquad 0\ otherwise \end{cases}$$

$$high\ pass(f) = iDCT(s_h)$$

$$s_h = \begin{cases} DCT(f)(x,y)\ if\ x \geq f_{cx}, y \geq f_{cy} \\ \qquad 0\ otherwise \end{cases}$$

Finally, as earlier mentioned, a block composer module BC within the MLM reconstructs the video at its original resolution by recombining all up sampled blocks , either dictionary based or not, together, frame by frame. Optionally, blending or a deblocking filter can be further used afterwards to smoothen transitions between patches that were up sampled using different LR/HR patches pairs from the dictionary or simply based on the predefined up sampling filter.

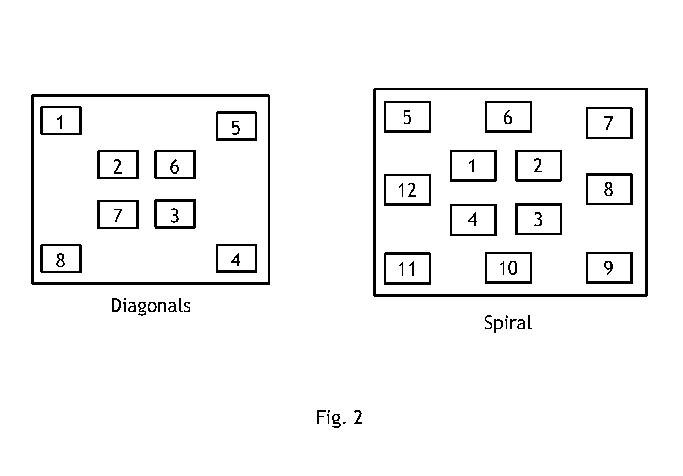

The selection of the patches in the patch extraction device PS in the sender can take place following a fixed selection pattern such as for instance shown in fig. 2, where a first patch of a certain size (e.g. 20x20 pixels) is selected from the first frame, from the upper left corner, followed by a selection from the second frame of a patch on the diagonal at 1/3 of the length from left up to down right corner, a third patch is selected from the third frame at a distance of 2/3 on this diagonal , followed by a fourth patch from the following frame, at the end of this diagonal. The fifth patch is selected from the fifth frame, in the upper right corner, the sixth patch from the next frame at 1/3 of the distance along the diagonal from upper right to lower left, the seventh patch from the next frame, at distance of 2/3 along this diagonal, and the 8th patch from the next frame at the lower left corner. This selection sequence is then repeated on all next frames.

The size of the patch itself can again be hardcoded in PS, or programmable by a user.

In all the embodiments the down sampling in the sender is dependent upon the power consumption of the sender. The sender is adapted to measure its own remaining battery lifetime e.g. by the presence of a power monitoring module P for continuously monitoring the power consumed so far as well as the remaining battery lifetime, according to known techniques. Battery lifetime and optionally also power consumption are provided to the down sampling module DS, which can, if needed , enlarge the down sampling factor, meaning that the resolution of the lower resolution video will be further reduced. This is for instance shown in figs. 1a-b, and 1d. Algorithms to do this can be based on fixed thresholds, meaning that, if the remaining battery lifetime is lower than a predetermined threshold, e.g. only 30% remaining battery lifetime, a higher down sampling factor will be selected, e.g. from 8 to 16. Alternatively, adaptive thresholds where the power consumption speed is compared with values in a look up table stating at which threshold of remaining battery life a transition to a smaller resolution must be done, hence reducing the power consumption speed, may also be used. Such a look up table can then be stored in the down sampling module itself, or in a memory in the sender to which the down sampling module DS has access to. This new power consumption speed will also have an associated remaining battery life threshold in the table and so forth. Other thresholds can also be set in such lookup table in order to account for the fact that the Sender device could then be set on charge, and then the down sampling factor can be progressively reduced.

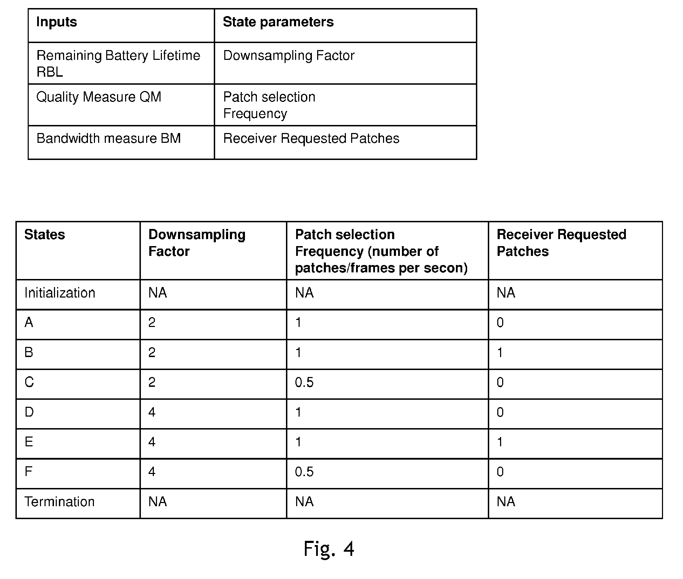

An example of such a look-up table is shown in figure 4.

In other embodiments the output signal pc of the power monitoring module can as well be provided to the patch selector PS, as is shown in fig. 1d. PS can then decide to e.g. skip a frame when selecting patches in case the power consumption becomes too high and/or the battery lifetime too low. This may as well be based on fixed or adaptive thresholds, either stored within the patch selector itself, or within a memory to which the patch selector has access.

In the embodiments depicted in Figs. 1a - b and d, there is a feedback channel denoted FBC, between the receiver and sender device, this feedback channel carrying information from the receiver to further optimize the selection of patches within the sender device. This information is denoted m(cp) and will be described in a further paragraph.

In the embodiments depicted in Figs. 1c-d there is another, this time a bi-directional communication channel between S and R. This bi-directional communication channel is denoted NC may carry negotiation communication messages between a bandwidth monitoring module BWMR in the receiver and a bandwidth monitoring module in the sender BWMS, as depicted in the embodiment of Fig. 1d. In Fig. 1c, NC is situated between a negotiation module in the sender and receiver which are respectively denoted NMS and NMR.

In Fig. 1d both BWMS and BWMR are adapted to measure the available bandwidth on the communication channel between both devices. This can be done for example by using standard bandwidth and network conditions probing and metering such as the SNMP protocol, the ACK information from the used transport protocol, or the RTCP information if RTP is used between the Sender and Receiver.

This bidirectional channel NC can correspond in one embodiment to the channel for signaling messages of http adaptive streaming video delivery. The Receiver sends in this respect request messages to the Sender, which messages include information with respect to a requested bit rate in view of the measured transmission channel capacity. Since the requested bit rate directly depends on the down sampling factor (the bit rate decreases when the resolution of the down sampled video decreases), and on the frame rate at which the patches are transmitted (the higher the frame rate, the higher the bit rate). The sender accordingly adapts the down sampling values based on the observed bandwidth conditions and/or the patch selection frequency. In the embodiment of Fig. 1d it are the BWMR and BWMS modules of receiver and sender which take care of this communication, and the BWMS module then derives from the requested bit rate, and the measured available bit rate for transmission of the encoded video, control signals for provision to the DS and PS modules in the sender which can, based on that, adapt the down sampling rate and the patch selection process. This is represented by the control signals c1 and c2 respectively on Fig. 1d. In addition there is still the feedback received over the feedback channel FBC, with respect to the quality of the received patches in the patch dictionary of the receiver. Information from this feedback will as well be used to change the patch selection process in PS , and also possibly the down sampling as is shown in the embodiment of Fig. 1d. This will be discussed further in a later paragraph.

It is to be noted that the quality of the reconstructed video decreases when the down sampling factor increases. There is a tradeoff between reducing bandwidth or power consumption requirements on one hand and the quality of the reconstructed video on the other hand. This tradeoff can be set by imposing that, for the transmission of the video, the battery expected lifetime should not go lower than a user-defined threshold (e.g. 20% or 30 % of remaining battery lifetime). As the length of the video might not be known in advance, adaptations can needed for segments of video content of fixed duration e.g. 30 seconds. Within this budget the sender may first start with a pre-defined down sampling factor that aims at high quality reconstruction at the receiver side. Since the receiver cannot know the quality performance of its reconstruction for the entire reconstruction frame, it can send a quality measure estimation which in an example can correspond to the number of blocks that could not be up sampled based on the received high resolution patches, corresponding to the blocks undergoing the standard up sampling, thus only using module PUP. Alternatively it can correspond to the ratio of blocks which did undergo the up-sampling using module DBUF. The quality measure for the patches in the dictionary is preferably indicative on the use of the high resolution patches ; the more times the high resolution patches are used for the calculation of the updated blocks, the better the quality of the patch dictionary, and as a consequence, also the quality of the reconstructed video, is. In case of only one patch, this refers to the quality of the single patch itself.

In figs 1a-d the receiver contains a module denoted FR, which is adapted to receive a signal, denoted fb from the machine learning module MLM. In the embodiment depicted on fig. 3, fb may represent the number or relative number of "yes" occasions in check module 500, thus representing the relative number of times a patch of the dictionary is used for the calculation of the reconstructed block of the reconstructed video RHRV.

In case the quality is high, the sender can further increase the down sampling factor for further saving battery lifetime. In case the quality is very low, the sender might either decrease the down sampling factor or even stop the transmission. For intermediate quality levels, a negotiation may take place between the sender and receiver, where the receiver can request specific patches to be selected for improving the quality of the reconstruction, as in some embodiments the receiver can predict positions of patches in frames that might be meaningful in order to improve the dictionary-based reconstruction. One simple approach is to aggregate over time the position of blocks that are not up sampled using the dictionary information and request patches that cover such positions. Although this might not always be accurate in case of camera motion or in case of occlusions, this technique can be a very good predictor of what patches will bring more information to the dictionary for future frames in case of a static camera.

For dynamic content, the receiver can use motion estimation, saliency estimation and region-of-interest detection on the RRVr in combination with the block position aggregation in order to predict the most relevant patch position to request for future frames.

The receiver may send more patch requests than the sender actually selects. The sender can then decide to respond to only a fraction of the requests for maintaining its current patch transmission frequency for maintaining processing power at the same level. This decision to respond to part or the totality of the requests based on the current power consumption or remaining battery lifetime can either be further negotiated, e.g. in the negotiation modules NMR and NMS of sender and receiver as shown in Fig. 1c. Based on the negotiated result the receiver may then adapt its requests in order to further prioritize and reduce requests using more complex patch selection algorithms.

During such negotiations also bandwidth restriction can be further taken into account. In the embodiment of Fig. 1c, the measured bandwidth , by the receiver module BWMR is provided to the feedback module which then both provides the requested patch information as well as the measured channel capacity restrictions over the bi-directional channel to the NMS module of the sender. If for instance 500 Mbit/sec is measured on the communication channel, then, in case of an original resolution of 1080p30, a down sampling factor of e.g. 4 can be selected, resulting in a reduced resolution of 240p30, while the patch frequency can be kept at one patch per input frame. If a bandwidth restriction restriction of 450 Mbit/sec is measured during operation, thus when the down sampling was already at a factor of 4, then the patch frame rate can for example be reduced by a factor 2, keeping the down sampling factor at 4.

Fig. 1c thus depicts an embodiment where over the bi-directional negotiation channel all bandwidth and patch quality feedback information is provided to the sender. An operation point module, denoted OP, within the sender will further also receive the information with respect to the remaining battery lifetime and power consumption. It will then calculate or determine from these inputs an adapted down sampling factor as well as adapted patch selection conditions. The resulting down sampling frequency/patch selection information is respectively provided to the respective modules under the form of control signals c2' and c1', as depicted in Fig. 1c.

In this embodiment, power consumption/battery lifetime are measured at the Sender, while available bandwidth is measured at the Receiver. The measurement results are used to decrease the resolution of the input video and to determine the frequency of the patch selection.

As earlier mentioned, module FR in the Receiver is further adapted to perform an analysis related to the quality of the received patches. As earlier mentioned, measuring the amount of blocks that are up-sampled based on the dictionary, can be an indication of having a good quality of selected patches at the sender. This can be understood from the fact that blocks of the received low resolution video which are just undergoing the "standard" up sampling operation, and thus not the further adaptation based on the high-resolution patches in the dictionary, are indicative of having not a sufficiently good matching patch available in the dictionary. The more "matching" high resolution patches, the better the original low resolution video can be restored to its original resolution.

Such a quality measure, which may , in an embodiment be represented by the ratio of blocks for which Pri is used, divided by the total number f blocks, is then transmitted back from the Receiver to the Sender, e.g. via the feedback signal m(cp), or over the bidirectional communication channel in Fig. 1c. The sender can compare this value again with a predetermined threshold , and, in case the score is lower than this threshold, the sender will either adapt the patch selection procedure, e.g. by increasing the patch selection frequency. A lower value for this threshold can be such that at least 70% (thresh_down) of the blocks should be up-sampled with the dictionary in order to have a good quality. On the other side, if 95% (thresh_up) of the blocks have matching patches in the dictionary, the sender could decide to reduce the frequency at which it sends patches.

Alternatively the sender can also reduce the down sampling factor or combination of both techniques.

In order to avoid a conflict between these two opposite mechanisms and in order to find the best tradeoff, the Sender can iteratively change the down sampling factor and the frequency of patches in order to increase the measured quality at the Receiver side, while maintaining its power consumption to a constant value, taking into account the remaining battery lifetime. This can be done by e.g. basic linear programming at the Sender side, e.g. by means or within the OP module, or other heuristics that do not require much processing power.

Further detailed embodiments will now be described, for dealing with different types of high resolution input videos.

In a first use case, method and devices are shown for dealing with high spatial resolution input videos. This thus means that the input video comprises images with a lot of pixels, such as e.g. 4K or 8K images, relating so images comprising about 4000x2000 , resp. 8000x4000 pixels. Such images are captured by a high resolution (e.g., HD, UHDTV, 4K, 8K content etc) video capture sensor such as UHD video cameras

In these embodiments the video encoder E can be a traditional video encoder such as a MPEG-2, H.264, H.265 encoder.

The sender is thus adapted to on one hand generate a low spatial resolution video RRV, and on the other hand to select patches from the high spatial resolution video. The selected patches in general have the same pixel-resolution, related to number of pixels/width and number of pixels per height as the capture video , but whereas the original high resolution images have a width of W0 and a height of HO, the patches will have a smaller width Wp and a smaller height Hp, such that Wp multiplied by Hp will only represent a low percentage of the original captured video resolution WoxHo e.g., the largest Coding unit, abbreviated with CU size if the video encoder is H.265 or the equivalent size in macro blocks if the video encoder is H.264). CU is 128x128 pixels.

The size of the patches can be set equal to the resolution of the RRV, meaning the reduced resolution frames contain as many pixels in the width /height direction as the patches; remark that the number of pixels/unit length is of course much higher for the patches compared to that of the RRV.

This is a preferred choice for encoding performance as well as the quality of the reconstruction.

Alternatively the size of the patches can be different, even lower, but preferably a multiple of 16 and larger than 32x32 pixels, to be sure that at least one 16x16 block is fully covered by a patch when it is up sampled by 2 or that a 8x8 block should be totally covered when up sampled by 4. Ideally it would be best to select a size of a patch so that it covers 4 up sampled blocks, given the downsampling factor.

Sending smaller patches required less bandwidth for the transmission and hence less power consumption at the Sender. The choice of the minimal patch size can be predefined based on the profile of the Sender device which profile comprises information about Operation Ssystem, display resolution, video capture resolution, available memory, battery lifetime, available video codec hardware acceleration, available software encoder, available wireless protocols etc. in and of the Sender

In an embodiment the patch selector PS uses either a limited set of implicit patch selection algorithms, such as the diagonal one previously explained. Fig. 2 also shown a spiral one, which is following another pattern for the selection.

In another embodiment the patch selector PS starts with a standard patch selection algorithm such as the one just described, and, upon receiving feedback from the receiver, further tunes the patch selection in accordance with the feedback information from the receiver. This information can thus be the quality score, which is compared in the sender with a predetermined threshold, and, in case the quality was sufficient, identified by the exceeding of a predetermined threshold, the patch selection is unchanged. In case the quality score is lower than the threshold, the sender can adapt the patch selection such as to adapt the frequency of the selection. In case the quality score is very good, as identified by the quality score lying close to the previously mentioned upper threshold, this may be indicative of the fact that no further patches are needed.

The receiver can alternatively also directly send patch requests to the sender's patch selector. In a sophisticated embodiment the receiver may thus comprise a video frame analyzer based on e.g. saliency estimation, face detection and can select the portions of the video frames where quality is visually more important than others (e.g. faces, specific moving objects etc). Requests are then made for blocks in these salient areas which were not up sampled in view of the Pri patches available in the dictionary. The number of requested patches can therefore be larger than the frequency at which the sender's patch selector selects patches. In this case, the receiver further prioritizes its requests by requesting patches that have the maximal impact on the salient regions blocks.

In one embodiment the patch selector in the sender is thus equipped with a block/patch quality score evaluation functionality that compares the quality score determined in the receiver with some predetermined limits. In another embodiment the patch selector is adapted to receive patch requests from the receiver. Alternatively, the receiver can even send back some up sampled blocks, together with the original blocks from the reduced received video, to the sender. In that case the sender calculates the quality score such as a MSE, a SAD (sum of absolute differences) itself, or a patch residual obtained by simple subtraction of the requested patch and the original corresponding video portion.

Based on the initial measured battery autonomy of the device, the down-sampling module in the sender initializes down-sampling resolution. This initial down-sampling resolution can have a predefined value, again determined by the device capabilities such as the original high resolution of the camera creating the high resolution video, hardware encoder parameters, power capabilities. This means that this minimal value of down sampling resolution (beyond one can not to lower) can be a hard limit , which can never be lowered. For example if the sender is capable of capturing 4K resolution content, the minimal down sampling factor can be set to two, so that the content is at maximum sent in HD.

This target resolution can be adapted , thus increased, at any time during the processing of the video input data based on the evolution of the power consumption or battery lifetime. One simple technique to adapt the down sampling resolution based on the power consumption, is to make use of the earlier mentioned look-up table that defines thresholds or remaining battery like with respect to measured power consumption speeds as well as the prescribed target resolution to be used for these values. For example, for a given consumption, a remaining battery lifetime threshold of 30% is defined as well as a down sampling resolution of e.g. 540p. For a threshold of 20%, a down sampling resolution of 280p can then be defined in the look-up table at the Sender side. The target objective is to be able to transmit the full length of the video without emptying the battery of the device. Based on the target resolution and continuously measured power consumption, the device selects the frequency at which patches need to be sent to the other device in a similar way as done for the downsampling resolution, for example, based on a predefined look-up table associating battery lifetime thresholds to frequency values for sending patches.

The encoder then compresses the down-sampled video as well as the selected patches. In case the target device requests the evaluation of its prediction on some patches, the device evaluates its current power autonomy and selects the frequency at which it responds to such requests by encoding and transmitting the residual patches to be sent to the second device. This encoding can be done in the same stream by one codec (e.g. auxiliary pictures, a ROI or enhancement layer for a scalable video codec), or encoded by two different specific light encoders (picture coding for patches such as JPG, or simple intra coding with H.264 or H.265) but could be packetized together in a single multimedia stream with header signalization.

In an embodiment the receiving device can also comprise a patch query functionality, that based on the downlink and uplink cost of the communication related to the distance to the base station, the used modulations and protocols, the transmission of a given bitrate might consume different levels of power between sender and receiver devices, selects either to send an up-sampled patch to be evaluated by the first device or requests a patch to be selected and sent by the first device.

The MLM thus may comprise :

- a block decomposer that takes the low resolution video frames as input and outputs patches to be super-resolved. This corresponds to module 400 of fig. 3
- an online learning (i.e. that adapts itself to new incoming data instead of learning only once based on a training set) functionality that builds iteratively a dictionary from input high-resolution patches as well as from previously up-sampled patch evaluations as requested by the second device. This corresponds to modules 100,200, of Fig. 3.
- a dictionary that is coupled to the online learning block, corresponding to module 300 of fig. 3
- a block analyzer that takes low resolution blocks from input frames and compares them to low resolution patches the dictionary. This corresponds to module 500.
- a FIR up-sampling filter (e.g. such as the ones used for interpolated motion compensation in H.264 or H.265) for default up-sampling, i.e. when the analyzed patches are significantly different from the current dictionary codebook. This may be an embodiment of module 600 of fig. 3
- a super-resolution updating module that is based on the learned dictionary codebook. This corresponds to the DBUF module 700 of fig. 3
- a block aggregation functionality, corresponding to module 800 of fig. 3, that composes the output up-sampled video from the up-sampled patches obtained from both up-sampling blocks. This possibly includes post-filtering such as deblocking if edges are detected between patches that were up-sampled differently.
- an interpolated patch query functionality that receives input from the block analyzer 500, and/or from the learning block and/or from the patch aggregation functionality. This corresponds to the FR module in Figs. 1a-d. In an embodiment this can as well be part of the MLM block.

The best tradeoff between power processing minimization at the sender and quality optimization of the reconstructed video at the receiver can be calculated or derived by a finite-state machine in the sender. This can for instance correspond to module OP in Fig. 1c. Such a state machine relies on a few principles in order to adapt the transmission to remaining battery lifetime at the sender side, to the estimated quality at the receiver side and the to the bandwidth measurements made by the receiver.

The mechanisms for adapting the transmission are as follows:

- increasing_downsampLing_factor(); This adaption enables to reduce the required bandwidth (encoding bit-rates decrease with lower resolution) and processing at the sender side (therefore reducing the speed at which the sender's battery drains). This adaption requires to update the dictionary at the receiver side as the size of the LR patches has to be reduced, however, HR patches in the dictionary remain valid. Another PUP has to be used to the new upsampling factor as well. The quality of the reconstruction will however be worse with high down sampling factors when using PUP, due to the higher amount of information lost. The need for a good dictionary is therefore higher.

  ○ Performed by the Sender based on battery remaining lifetime input
  ○ Asked by the Receiver to the Sender based on bandwidth measure input

- decreasing_down sampling_factor(); This adaption enables to improve the quality of the up sampling at the receiver side, but has an impact on the required bandwidth (encoding bit-rates increase with higher resolutions) and processing at the sender side (therefore increasing the speed at which the sender's battery drains). This adaption requires to update the dictionary at the receiver side as the size of the LR patches has to be increased, however, HR patches in the dictionary remain valid. Another PUP has to be used to the new upsampling factor as well. This adaption is interesting when a larger bandwidth is available and that the reconstructed quality was previously low due to a large downsampling factor.

  ○ Asked by the Receiver to the Sender based on bandwidth and quality measure input

- Increasing_patch_frequency(); This adaption enables to increase the number of patches sent by the sender with respect to the number of frames sent per second. This enables to more rapidly build a dictionary at the receiver side when the content significantly changes (new information, occlusions) or at the start of the transmission.

  ○ Asked by the Receiver based on quality measure input

- Decreasing_patch_frequency();This adaption enables to decrease the number of patches sent by the sender with respect to the number of frames sent per second. This enables to slightly reduce the required bandwidth and the processing at the sender side, when the estimated quality at the receiver side is high.

  ∘ Asked by the Receiver based on quality measure input

- Request_Patches(); This adaption is requested by the receiver when the implicitly selected patches at the sender side cannot be added to the dictionary because they do not bring more information (they are similar to the patches already present in the dictionary) while the estimated quality is low (the ratio of blocks upsampled by the PUP over the total number of blocks in frames is higher than a threshold of e.g. 50%). The receiver then requests specific positions of patches (pixel coordinates of the top left corner of the patch in the original resolution video frames) that can improve the dictionary. These positions are estimated based on high-level information estimation such as saliency, face detection, optical flow or more simply based on the position of blocks that are systematically upsampled by the PUP for M consecutive frames. This patch request increases the processing at the sender side and also slightly the amount of data to be received by the sender, but has an important impact on the reconstruction quality at the receiver. However, the sender, based on its battery remaining lifetime can call "reduce_patch_frequency()" in order to reduce the amount of requested patches to be sent

  o Asked by the Receiver when the reconstruction quality is low in general or locally in some portions of the video

- Stop Request Patches; This action is taken by the Sender when it has to change the downsampling factor due to bandwidth measures or remaining battery lifetime.

  o Performed by the Sender

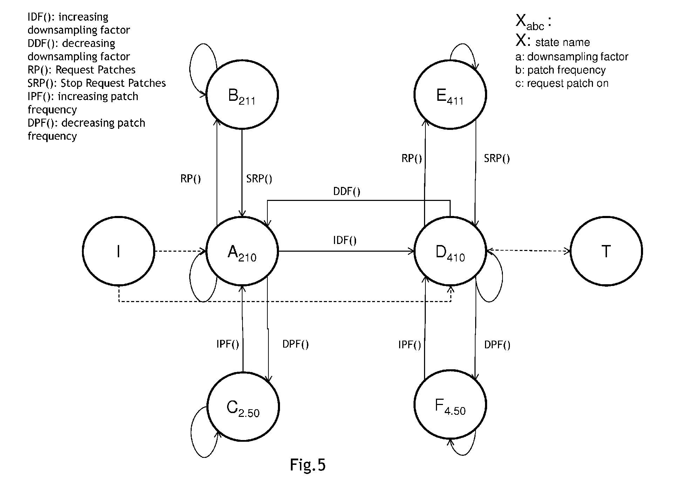

An example of such a State Machine is illustrated on Figure 5 and associated table 6.

In a second use case 2, the high resolution input video can be a stream with a high Temporal resolution. This means that, compared to the previously discussed used case, the input video has a higher frame rate (e.g. 24, 30, 50, 60, 120 fps, etc) . The down-sampling operation at the sender device will reduce the frame rate by either performing a simple reduction of the number of frames in a dyadic manner or with a simple averaging filter in order to avoid temporal aliasing. Patches sent by the first device are also selected on dropped original frames, but the main selection mechanism can be the same as these set out in previous paragraphs. The PUP of the receiver device includes now a temporal super-resolution block that interpolates frames at the original target frame rate with either a linear interpolation filter. DBUF may comprise an adaptive filter learnt from the patches.

The PUP is here achieved by using motion-compensated interpolation. In the example of a upsampling by a factor 2, the frame at time t2 needs to be interpolated from frames at time t1 and t3 with this relationship:

$$t2 = t1 + (t3-t1)/2$$

Each frame block bij of the frame to be interpolated is obtained as follows:

$$bij(x,y,t2)=f1*bij(x+vijx/2,y+vijy/2,t1)+f2* bij(x-vijx/2,y-vijy/2,t3)$$

where vij={vijx, vijy} is the motion vector defined between the block bij at time t1 and corresponding block bkl at time t3, and with f1 and f2 generally set equal to ½.

Motion vectors can be estimated by the same algorithms as the ones used for motion estimation and motion compensation in H.264/AVC or H.265/HEVC, or by optical flow algorithms. The use of a linear approximation of the motion vector at t2 (i.e.e vijx/2, vijy/2) is based on the assumption that the optical flow between blocks at frames t1 and t3 is linear. In case t1 and t3 are distant to each other, the assumption is less and less valid and the probability of occlusions (data present in one frame but not in the other) is higher.

More specifically problem occurs when occlusions prevent a correct motion vector to be found as the block of data present at time t3 does not appear in the frame at time t1 and vice versa. Without additional information, the problem of generating the corresponding blocks at time t2 is ill-posed. The best prediction can be made from either bij(x+vijx/2,y+vijy/2,t1) or bij(x-vijx/2,y-vijy/2,t3) where vij is obtained by the median filtering of the available motion vectors at blocks bkl that are the neighbors of block bij (this means for example the blocks up, left, right and down to bij), or by using graph cut optimization to smooth transitions between frames at t1, t2 and t3 for the corresponding blocks.

The availability of patches covering several blocks of the frame in t2 enables the solve this issue by obviously giving ground truth for the corresponding blocks but also by correcting the linear assumption made on the motion vectors between frames at t1 and t3.

The Dictionary-based upsampling filter is then obtained as follows:

$$bij(x,y,t2) = f1*bij(x+vijx/2,y+vijy/2,t1)+f2* bij(x-vijx/2,y-vijy/2,t3) + (patch\_bij(x,y,t2)-$$

$$f1*bij(x+vijx/2,y+vijy/2,t1)+f2* bij(x-vijx/2,y-vijy/2,t3)),$$

when the patch contains the position of block bij or contains a block that is similar enough to bij.
Optionally, more accurate motion vectors can be inferred from the blocks contained in the reveived patches.

$$bij(x,y,t2)=f1*bij(x+v'ijx/2,y+v'ijy/2,t1)+f2* bij(x-v''ijx/2,y-v''ijy/2,t3)$$

where (v'ijx, v'ijy) and (v''ijx, v''ijy) are respectively the corrected motion vectors based on the the motion of neighboring blocks at time t2 that are contained in the patches of the dictionary.

Patches are therefore included in the dictionary with metadata specifying their position, x,y, their size sx, sy and their timestamp e.g. t2 in the former notations.

A third use case deals with high bit-depth resolution, meaning that the high resolution input video will have higher bit depth values, typical of High Density Resolution content (for example 10 or 12 bits per color channel instead of 8). In this case, the sender device may use tone mapping to remap the original high bit depth content to 8 bit content. Patches are sent with full bit-depth content. The receiver device uses inverse tone mapping techniques that can be improved by machine learning by observing the received patches.

Noting the luminance for each pixel of the HDR source $L_{HDR}$:

$$L_{HDR} = 0.213\,R_{HDR} + 0.715\,G_{HDR}+0.072B_{HDR}$$

where $R_{HDR}$, $G_{HDR}$ and $B_{HDR}$ are the red, green and blue components of the HDR content.

Noting Ld, Rd, Gd and Bd the luminance, red, green, and blue components of pixels at the downsampled source, we have for each pixel:

$$Ld(x,y) = \frac{(s\,/\,m_{HDR})\,L_{HDR}(x,y)}{1 + (s\,/\,m_{HDR})\,L_{HDR}(x,y)}$$

Where s is a parameter that enables to amplify contrast, $m_{HDR}$ is the average of $L_{HDR}$ over all pixels in a frame, which can be for example taken as the geometric average:

$$m_{HDR} = exp(\frac{1}{M} \sum_{x,y} \log{(\varepsilon + L_{HDR}(x,y))}).$$

Where M is the number of pixels of the frame and epsilon is typically a small and non-negative value.

The PUP is then performed by inversing this transform.

$$L_{HDR}(x,y) = \frac{L_d(x,y)m_{HDR}}{s\,(1 - L_d(x,y))}$$

For pixels contained in blocks that are similar to patches that have been included in the dictionary, the upsampling filter becomes

$$L_{HDR}(x,y) = \frac{L_d(x,y)m_{HDR}}{s\left(1 - L_d(x,y)\right)} + \left( L_{HDR}^p(x,y) - \frac{L_d^p(x,y)m_{HDR}}{s\left(1 - L_d^p(x,y)\right)} \right)$$

Where $L_{HDR}^p$ and $L_d^p$ are respectively the HDR and downsampled versions of the dictionary patch pixels.

In a fourth use case 4, the original high resolution input video has a high color resolution. The original high resolution video content might be captured at YUV 4:4:4 while it would be desirable to only send YUV 4:2:0. In this case, chroma linear filtering is applied in the receiver, improved via machine learning based on observations made on patches sent at full chroma resolution.

Chrominance values downsampled at the 4:2:0 format can be upsampled back to 4:4:4 format by using a well-known FIR filter (PUP) such as:

$$f = [-1 \ 0 \ 9 \ 16 \ 9 \ 0 \ -1]$$

which is applied on the available chroma samples in order to estimate the missing chroma samples.

The dictionary-based upsampling uses for each block bij similar to the low chroma resolution pij of a full resolution chroma patch Pij in the dictionary an upsampling filter as follows:

$$Bij(x,y) = upsampling\ (bij) + (Pij\text{-}upsampling(pij))$$

Where the upsampling is implemented using the PUP filter f.

It is to be mentioned that all the signal processing on the incoming video signals as well as the monitoring of the consumed power in the sender, the determination of the state, the communications modules, the bandwidth monitoring of the communications channel and the generation of the feedback channel in the receiver can all be performed by one single processor, one for the sender, one for the receiver. Alternatively several processing modules can be used for executing some of or part of the steps as indicated by the different modules in the figures.

In the claims hereof any element expressed as a means for performing a specified function is intended to encompass any way of performing that function. This may include, for example, a) a combination of electrical or mechanical elements which performs that function or b) software in any form, including, therefore, firmware, microcode or the like, combined with appropriate circuitry for executing that software to perform the function, as well as mechanical elements coupled to software controlled circuitry, if any. The invention as defined by such claims resides in the fact that the functionalities provided by the various recited means are combined and brought together in the manner which the claims call for, and unless otherwise specifically so defined, any physical structure is of little or no importance to the novelty of the claimed invention. Applicant thus regards any means which can provide those functionalities as equivalent as those shown herein.

While the principles of the invention have been described above in connection with specific apparatus, it is to be clearly understood that this description is made only by way of example and not as a limitation on the scope of the invention, as defined in the appended claims.

**Claims**

**1.** Sender device (S) adapted to receive a high resolution video (HRV) and to generate a reduced resolution video (RRV) by down sampling said high resolution video (HRV), said sender device (S) further being adapted to select at least one high resolution patch (Pi) from at least one frame from said high resolution video (HRV), and to encode said reduced resolution video (RRV) and said at least one patch (Pi) for further transmission to a receiver device (R), said sender device further being adapted to monitor the power consumed and remaining battery lifetime of said sender device (S), and to control the down sampling of said high resolution video as being dependent upon the remaining battery lifetime, said sender device further being adapted to receive a feedback signal from said receiving device, said feedback signal comprising information concerning the quality of the at least one patch, during the reconstruction of the high resolution video in said receiving device, said sender device (S) further being operational to adapt the selection of said at least one patch based on said feedback signal.

**2.** Sender device according to claim 1 further being adapted to select successive ones of said at least one high resolution patches from successive frames of said high resolution video (HRV).

**3.** Sender device (S) according to claim 1 or 2 further being adapted to receive bandwidth information concerning the bandwidth of the communication link between the sender device and said receiver device ®, and to adapt the down-sampling and/or the patch selection based on said bandwidth information.

**4.** Sender device further being adapted to determine the down sampling factor from said feedback signal from the receiver device.

**5.** Sender device further being adapted to provide further metadata information concerning the down sampling and encoding to said receiver device.

**6.** Receiving device (R) adapted to decode an encoded low resolution video stream (ERRVr) and at least one encoded high resolution patch (EPr) received from a sender device (S), into a received low resolution video stream (RRVr) and at least one received high resolution patch (Pr), said receiving device (R) being adapted to reconstructing a high resolution video stream from said at least one received high resolution patch (Pr) and said received low resolution video stream (RRVr) by comparing blocks of frames of said received low resolution video stream (RRVr) with a down-sampled version (pr) said at least one received high resolution patch (Pr), such that, in case there is a correspondence, a reconstructed block will be generated based upon said at least one received high resolution patch, said receiver device further being adapted to determine the quality of the at least one received high resolution patch by evaluating its use during the reconstruction of the high resolution video and to provide a feedback signal to said sender device comprising said quality information.

**7.** Receiving device according to claim 6, further being adapted to store successive ones of said at least one received high resolution patches.

**8.** Receiving device according to any of the previous claims 6 or 7 further being adapted to request additional patches based on the determination of the quality and/or provide an indication of the frame region from which to select said additional patches in the high resolution video at the sender device.

**9.** Method for compression of a high resolution video by a sender, said method comprising receiving said high resolution video, generating a reduced resolution video (RRV) by down sampling said high resolution video (HRV), said method further comprising selecting at least one high resolution patch (Pi) from at least one frame from said high resolution video (HRV), and to encode said reduced resolution video (RRV) and said at least one patch (Pi) for further transmission to a receiver device, whereby the down sampling of said high resolution video is dependent upon a remaining battery lifetime of said sender, and whereby the patch selection is further dependent upon a feedback signal from said receiving device, said feedback signal comprising information concerning the quality of the at least one patch, received at said receiver.

**10.** Method for generating a reconstructed high resolution video stream (RHRV) from a received encoded low resolution video stream (ERRVr) and at least one received encoded high resolution patch in a receiver, said method comprising decoding said encoded low resolution video stream and said least one encoded high resolution patch (EPr), into a received low resolution video stream (RRVr) and at least one received high resolution patch (Pr), said method further comprising a step of comparing blocks of frames of said received low resolution video stream (RRVr) with a down-sampled version (pr) of said at least one received high resolution patch (Pr), such that, in case there is a correspondence, a reconstructed block will be generated based upon said at least one high resolution received patch, said method further comprising a step to determine the quality of the at least one received high resolution patch by evaluating its use during the reconstruction of the high resolution video and to provide a feedback signal comprising said quality information to a sender device which has provided said encoded low resolution video stream (ERRVr) and said at least one received encoded high resolution patch to said receiver.

**11.** A computer program adapted to perform the method of claims 9 or 10.

**12.** Computer readable storage medium comprising instructions to cause a data processing apparatus to carry out the program of claim 11.

Fig. 1a

Fig. 1b

Fig. 1c

Fig. 1d

Diagonals

Spiral

Fig. 2

Fig. 3

| Inputs | State parameters |
|---|---|
| Remaining Battery Lifetime RBL | Downsampling Factor |
| Quality Measure QM | Patch selection Frequency |
| Bandwidth measure BM | Receiver Requested Patches |

| States | Downsampling Factor | Patch selection Frequency (number of patches/frames per secon) | Receiver Requested Patches |
|---|---|---|---|
| Initialization | NA | NA | NA |
| A | 2 | 1 | 0 |
| B | 2 | 1 | 1 |
| C | 2 | 0.5 | 0 |
| D | 4 | 1 | 0 |
| E | 4 | 1 | 1 |
| F | 4 | 0.5 | 0 |
| Termination | NA | NA | NA |

Fig. 4

Fig.5

IDF(): increasing downsampling factor
DDF(): decreasing downsampling factor
RP(): Request Patches
SRP(): Stop Request Patches
IPF(): increasing patch frequency
DPF(): decreasing patch frequency

$X_{abc}$ :
X: state name
a: downsampling factor
b: patch frequency
c: request patch on

| Current State | Inputs | Next State | Action |
|---|---|---|---|
| Initialization 4K input | (RBL >50pc) AND (BM>5Mbps) | A | Set downsampling factor to 2 |
| Initialization 4K input | (RBL <20pc) OR (BM < 500 kbps) | T | Terminate |
| Initialization 4K input | (RBL >50pc) AND (500kbps < BM <5Mbps) | D | Set downsampling factor to 4 |
| A | (RBL >50pc) AND (BM>5Mbps) AND (Thresh_up> QM>thresh_down) | A | Continue |
| A | (20pc <RBL <50pc) OR (500kbps<BM<5Mbps) | D | Set downsampling factor to 4 |
| A | (RBL >50pc) AND (BM>5Mbps) AND (QM<thresh_down) | B | Request Patches |
| A | (RBL >50pc) AND (BM>5Mbps) AND (QM>thresh_up) | C | Reduce Patch Frequency |
| A | (RBL <20pc) OR (BM < 500 kbps) | T | Terminate |

Fig. 6

| Current State | Inputs | Next State | Action |
|---|---|---|---|
| B | (RBL >50pc) AND (BM>5Mbps) AND (QM<thresh_down) | B | Continue |
| B | (RBL <20pc) OR (BM < 500 kbps) | T | Terminate |
| B | (20pc <RBL <50pc) OR (500kbps<BM<5Mbps) | D | Set downsampling factor to 4 |
| B | (RBL >50pc) AND (BM>5Mbps) AND (QM>thresh_down) | A | Stop requesting patches |
| C | (20pc <RBL <50pc) OR (500kbps<BM<5Mbps) | D | Set downsampling factor to 4 |
| C | (RBL >50pc) AND (BM>5Mbps) AND (QM>thresh_up) | C | Continue |
| C | (RBL <20pc) OR (BM < 500 kbps) | T | Terminate |
| C | (RBL >50pc) AND (BM>5Mbps) AND (QM<thresh_up) | A | Increase Patch Frequency |

Fig. 6 (cont'd)

| Current State | Inputs | Next State | Action |
|---|---|---|---|
| D | (RBL >50pc) AND (BM>5Mbps) AND (QM<thresh_down) | A | Decrease downsampling factor |
| D | (RBL <20pc) OR (BM < 500 kbps) | T | Terminate |
| D | [(20pc <RBL <50pc) OR (500kbps<BM<5Mbps)] AND [QM<thresh_down] | E | Request Patches |
| D | [(20pc <RBL <50pc) OR (500kbps<BM<5Mbps)] AND [QM>thresh_up] | F | Reduce patch frequency |
| D | [(20pc <RBL <50pc) OR (500kbps<BM<5Mbps)] AND [Thresh_up> QM>thresh_down] | D | Continue |
| E | [(20pc <RBL <50pc) OR (500kbps<BM<5Mbps)] AND [QM<thresh_down] | E | Continue |
| E | (RBL <20pc) OR (BM < 500 kbps) | T | Terminate |
| E | [(20pc <RBL <50pc) OR (500kbps<BM<5Mbps)] AND [QM>thresh_down] | D | Stop requesting patches |
| E | (RBL >50pc) AND (BM>5Mbps) AND (QM<thresh_down) | A | Decrease downsampling factor |

# Fig. 6 (cont'd)

| Current State | Inputs | Next State | Action |
|---|---|---|---|
| F | (RBL >50pc) AND (BM>5Mbps) AND (QM<thresh_down) | A | Decrease downsampling factor |
| F | (RBL <20pc) OR (BM < 500 kbps) | T | Terminate |
| F | [(20pc <RBL <50pc) OR (500kbps<BM<5Mbps)] AND [QM<Thresh_up] | D | Increase Patch Frequency |
| F | [(20pc <RBL <50pc) OR (500kbps<BM<5Mbps)] AND [QM>Tresh_up] | F | Continue |
| T | - | - | End of transmission |

Fig. 6 (cont'd)

Europäisches
Patentamt

European
Patent Office

Office européen
des brevets

## EUROPEAN SEARCH REPORT

**Application Number**

EP 14 30 7117

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2014/177706 A1 (FERNANDES FELIX C [US] ET AL) 26 June 2014 (2014-06-26) * paragraphs [0030] - [0072], [0119] - [0128] * | 1-12 | INV. H04N21/24 H04N21/2343 H04N21/845 H04N21/6336 |
| Y | US 2006/215755 A1 (JU CHI-CHENG [TW]) 28 September 2006 (2006-09-28) * paragraphs [0022] - [0024]; figure 6 * | 1-12 | H04N21/6379 H04N21/442 H04N19/156 H04N19/164 |
| Y | US 2011/268186 A1 (MUKHERJEE DEBARGHA [US] ET AL) 3 November 2011 (2011-11-03) * paragraphs [0014] - [0054] * | 1-12 | H04N21/443 H04N19/132 H04N19/46 |
| Y | EP 2 680 221 A1 (ALCATEL LUCENT [FR]) 1 January 2014 (2014-01-01) * paragraphs [0006] - [0021], [0027] - [0057] * | 1-12 | ADD. H04N21/4728 |
| Y | US 2009/232480 A1 (JENDBRO MAGNUS [SE]) 17 September 2009 (2009-09-17) * paragraphs [0069] - [0074]; figure 6 * | 1-12 | |
| Y | US 2012/195356 A1 (YI FENG [US] ET AL) 2 August 2012 (2012-08-02) * paragraphs [0010], [0012] * | 1-12 | TECHNICAL FIELDS SEARCHED (IPC) H04N |
| Y | US 2009/067491 A1 (SUN XIAOYAN [CN] ET AL) 12 March 2009 (2009-03-12) * paragraphs [0018] - [0045] * | 1-12 | |

The present search report has been drawn up for all claims

| Place of search | Date of completion of the search | Examiner |
|---|---|---|
| Munich | 20 April 2015 | Sanahuja, Francesc |

EPO FORM 1503 03.82 (P04C01)

## ANNEX TO THE EUROPEAN SEARCH REPORT
## ON EUROPEAN PATENT APPLICATION NO.

EP 14 30 7117

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-2015

| Patent document cited in search report | | Publication date | Patent family member(s) | | Publication date |
|---|---|---|---|---|---|
| US 2014177706 | A1 | 26-06-2014 | NONE | | |
| US 2006215755 | A1 | 28-09-2006 | CN | 1838772 A | 27-09-2006 |
| | | | US | 2006215755 A1 | 28-09-2006 |
| US 2011268186 | A1 | 03-11-2011 | NONE | | |
| EP 2680221 | A1 | 01-01-2014 | CN | 104395928 A | 04-03-2015 |
| | | | EP | 2680221 A1 | 01-01-2014 |
| | | | WO | 2014001243 A1 | 03-01-2014 |
| US 2009232480 | A1 | 17-09-2009 | US | 2009232480 A1 | 17-09-2009 |
| | | | WO | 2009112896 A2 | 17-09-2009 |
| US 2012195356 | A1 | 02-08-2012 | NONE | | |
| US 2009067491 | A1 | 12-03-2009 | US | 2009067491 A1 | 12-03-2009 |
| | | | WO | 2009033119 A1 | 12-03-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MAES, F. ; COLLIGNON, A. ; VANDERMEULEN, D. ; MARCHAL, G. ; SUETENS, P.** Multimodality image registration by maximization of mutual information. *Medical Imaging, IEEE Transactions on,* 1997, vol. 16 (2), 187-198

- **LEWIS, J. P.** Fast normalized cross-correlation. *Vision interface,* May 1995, vol. 10 (1), 120-123